# EUROPÄISCHE PATENTSCHRIFT

(11) **EP 4 345 435 B1**
(45) Veröffentlichungstag und Bekanntmachung des Hinweises auf die Patenterteilung: **13.08.2025**
(21) Anmeldenummer: 23196105.3
(22) Anmeldetag: 07.09.2023
(51) Int. Cl.: G01L 1/24, G01L 1/25, G01L 9/00, G01L 11/02, G01L 27/00

(54) **DRUCKSENSORSYSTEM**
PRESSURE SENSOR SYSTEM
SYSTÈME DE CAPTEUR DE PRESSION

(30) Priorität: 28.09.2022 DE 102022210258
(43) Veröffentlichungstag der Anmeldung: 03.04.2024
(73) Patentinhaber: ContiTech Deutschland GmbH, 30175 Hannover (DE)
(72) Erfinder: Dr. Reck, Siegfried, 30165 Hannover (DE); Campana, Manuel, 30165 Hannover (DE)
(74) Vertreter: Preusser, Andrea

(56) Entgegenhaltungen:
- EP-A1- 2 127 957
- WO-A1-2017/117488
- US-A1- 2016 283 006

## Beschreibung

Die vorliegende Erfindung betrifft ein Drucksensorsystem.

Um mechanische Normal- und Scherspannungen zu messen, müssen die Messwandler so in das Bauteil integriert werden, dass sie den zu messenden Kraftfluss erfassen können. Ist dieser Kraftfluss inhomogen, sind üblicherweise flächige Sensoren notwendig.

Druckmessfolien auf elastomerer Basis, die für jeweils eine Messung in das Bauteil eingefügt werden, bilden die Verteilung der aufgetretenen Maximalspannungen durch Farbveränderungen ab. Dies ist üblicherweise jedoch ungenau, kann nicht elektronisch erfasst werden und es ist pro Messung jeweils eine unbenutzte Druckmessfolie zu verbauen, wieder zu entfernen und auszuwerten, was diese Art der Erfassung von Normal- und Scherspannungen unattraktiv macht.

Mit Hilfe elektronischer Druckmessfolien lassen sich Normalspannungsverteilungen kontinuierlich sowie elektronisch vermessen. Beispielsweise eine Matrix aus piezoresistiven Messwandlern liefert die Daten für ein räumlich aufgelöstes Bild.

Alternativ können sich dielektrische Elastomersensoren (DES) für die Messung von mechanischen Normalspannungen eignen. Elektronische Druckmessfolien nach dem Stand der Technik bestehen üblicherweise aus druckempfindlichen Widerständen, die zu linienförmigen oder flächigen Sensoren verschaltet sind, mit denen die lokale Verteilung des Drucks gemessen werden kann.

Bis auf die dielektrischen Elastomersensoren eignen sich jedoch derartige bekannte Sensoren nur bedingt zur Messung von mechanischen Spannungen in elastomeren Körpern, weil die dielektrischen Elastomersensoren relativ großen Dehnungen nicht folgen können. Außerdem sind piezoresistive Druckmessfolien teuer, so dass sie vorzugsweise für diskontinuierliche Messungen verwendet werden.

Nachteilig bei bekannten Druckmessfolien ist allgemein, dass üblicherweise alle Widerstände einzeln angesteuert und ihre druckabhängigen Messwertsignale erfasst sowie ausgewertet werden müssen. Dies erfordert einen hohen Aufwand an Verdrahtung und an Elektronik.

Aus der DE 10 2020 216 234 A1 ist eine Vorrichtung zur Erfassung von mechanischen Normalspannungen in einem Elastomerbauteil bekannt, mit einem Elastomerbauteil, mit wenigstens einem Normalspannungssensor, wobei der Normalspannungssensor wenigstens einen Resonator aufweist, dessen Eigenfrequenz von den zu erfassenden mechanischen Normalspannungen, vorzugsweise zumindest im Wesentlichen linear, abhängig ist, wobei wenigstens der Resonator derart in das Elastomerbauteil eingebettet ist, dass auf das Elastomerbauteil wirkende mechanische Normalspannungen die Eigenfrequenz des Resonators verändern können, und mit wenigstens einer Steuerungseinheit, welche ausgebildet ist, den Resonator zu Schwingungen in dessen Eigenfrequenz anzuregen und dessen Schwingungen zu erfassen, wobei die Steuerungseinheit ferner ausgebildet ist, aus den erfassten Schwingungen des Resonators die mechanischen Normalspannungen des Elastomerbauteils zu bestimmen.

Mit anderen Worten wird ein Normalkraftsensor für elastomere Bauteile beschrieben, welcher aus einer sogenannten symmetrischen Mikrowellen-Streifenleitung besteht, die als Resonator ausgeführt ist. Entlang der Längsachse oberhalb und unterhalb eines Leiterstreifens befindet sich jeweils ein Dielektrikum, das auf seiner Außenfläche mit einer leitfähigen Schicht bedeckt ist und elektrisch auf Masse-Potenzial liegt. Die zu messende Normalkraft komprimiert die Streifenleitung entlang der Längsachse und verringert somit den Abstand zwischen dem mittig angeordneten Leiterstreifen und den beiden äußeren Masseflächen entlang der Längsachse, wodurch sich die Wellenimpedanz sowie der Reflexionsfaktor der Anordnung ändern. Bei der Kraftmessung wird die Streifenleitung mit einem Impedanz-Spektrometer verbunden, das die Wellenimpedanz und der Reflexionsfaktor auswertet und daraus das Messergebnis berechnet.

Nachteilig an der Vorrichtung der DE 10 2020 216 234 A1 ist, dass auf diese Art und Weise lediglich die mittlere Normalspannung erfasst werden kann, welche in Mitte der Fläche des Normalspannungssensor wirkt.

Nachteilig ist bei der Vorrichtung der DE 10 2020 216 234 A1 auch, dass es sich hierbei um eine vergleichsweise massive Vorrichtung und in jedem nicht um eine Folie handelt, was die Anwendungsmöglichkeiten einschränkt. Das Dokument WO2017/117488A1 offenbart ebenfalls ein Drucksensorsystem mit einem Wellenleiter.

Eine Aufgabe der vorliegenden Erfindung ist es, einen Drucksensor bzw. ein Drucksensorsystem zur Verfügung zu stellen, um eine flächige Druck- bzw. Krafterfassung besser als bisher bekannt durchführen zu können. Zumindest soll eine Alternative zu bekannten Möglichkeiten zur Messung von flächigen Kräften bzw. Drücken geschaffen werden.

Die Aufgabe wird erfindungsgemäß durch ein Drucksensorsystem, durch einen Drucksensor und durch eine Steuerungseinheit mit den Merkmalen der unabhängigen Patentansprüche gelöst. Vorteilhafte Weiterbildungen sind in den Unteransprüchen beschrieben.

Somit betrifft die Erfindung ein Drucksensorsystem nach Anspruch 1.

Hierdurch können die entsprechenden Nachteile wie zuvor beschrieben vermieden werden. Insbesondere können auf diese Art und Weise flächig einwirkende Kräfte bzw. Drücke kontinuierlich sensorisch erfasst werden.

Gemäß einem Aspekt der Erfindung wurde der vorbestimmte Reflektionsfaktor des Wellenleiters im unbelasteten Zustand bestimmt. Hierdurch kann ein Vergleichswert für den konkreten Anwendungsfalls bzw. dessen aktuellen Zustand bestimmt und verwendet werden.

Gemäß einem weiteren Aspekt der Erfindung ist die Steuerungseinheit ausgebildet und eingerichtet, aus der Differenz des vorbestimmten Reflektionsfaktors und des bestimmten Reflektionsfaktors die einwirkende Kraft mittels einer inversen Fourier-Transformation zu bestimmen. Dies kann eine konkrete Möglichkeit der Umsetzung darstellen.

Gemäß einem weiteren Aspekt der Erfindung ist die Steuerungseinheit ausgebildet und eingerichtet, aus der Differenz des vorbestimmten Reflektionsfaktors und des bestimmten Reflektionsfaktors die einwirkende Kraft anhand von gespeicherten Kennfeldern zu bestimmen. Dies kann eine alternative konkrete Möglichkeit der Umsetzung darstellen.

Gemäß einem weiteren Aspekt der Erfindung ist der Wellenleiter als Mikrostreifenleitung ausgebildet. Dies kann eine konkrete Möglichkeit der Umsetzung darstellen.

Gemäß einem weiteren Aspekt der Erfindung ist der Wellenleiter sich flächig zur einwirkenden Kraft erstreckend ausgebildet. Dies kann eine konkrete Möglichkeit der Umsetzung darstellen.

Die vorliegende Erfindung betrifft auch einen Drucksensor in Form eines Wellenleiters zur Verwendung in einem Drucksensorsystem wie zuvor beschrieben. Hierdurch kann ein Drucksensor zur Verfügung gestellt werden, um ein Drucksensorsystem wie zuvor beschrieben umzusetzen und dessen Eigenschaften und Vorteile zu nutzen.

Die vorliegende Erfindung betrifft ferner eine Steuerungseinheit zur Verwendung in einem Drucksensorsystem wie zuvor beschrieben. Hierdurch kann eine Steuerungseinheit geschaffen werden, um das zuvor beschriebene Drucksensorsystem zu realisieren und dessen Eigenschaften und Vorteile nutzen zu können. Auch kann die Steuerungseinheit universell verwendet werden, z.B. für ähnliche Vorrichtungen bzw. Mess-Systeme, bei entsprechender Anpassung der softwareseitigen Umsetzung der zuvor beschriebenen Funktionen auf den jeweiligen Anwendungsfall.

Erfindungsgemäße Drucksensorsysteme können insbesondere bei elastomeren Bauteilen wie beispielsweise Riemen, Luftfedern, Schläuchen, Gurten, Lagern etc. sowie in der Messtechnik allgemein eingesetzt werden.

Ein Ausführungsbeispiel und weitere Vorteile der Erfindung werden nachstehend im Zusammenhang mit der folgenden Figur erläutert. Darin zeigt:
- Fig. 1: eine schematische Darstellung eines Längsschnitts durch einen unbelasteten erfindungsgemäßen Drucksensor;
- Fig. 2: eine schematische Darstellung eines Horizontalschnitts durch den unbelasteten erfindungsgemäßen Drucksensor der Fig. 1;
- Fig. 3: eine schematische Darstellung eines Längsschnitts durch einen belasteten erfindungsgemäßen Drucksensor;
- Fig. 4: eine schematische Darstellung eines Horizontalschnitts durch den belasteten erfindungsgemäßen Drucksensor der Fig. 3; und
- Fig. 5: eine schematische Darstellung durch ein erfindungsgemäßes Drucksensorsystem mit dem erfindungsgemäßen Drucksensor.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

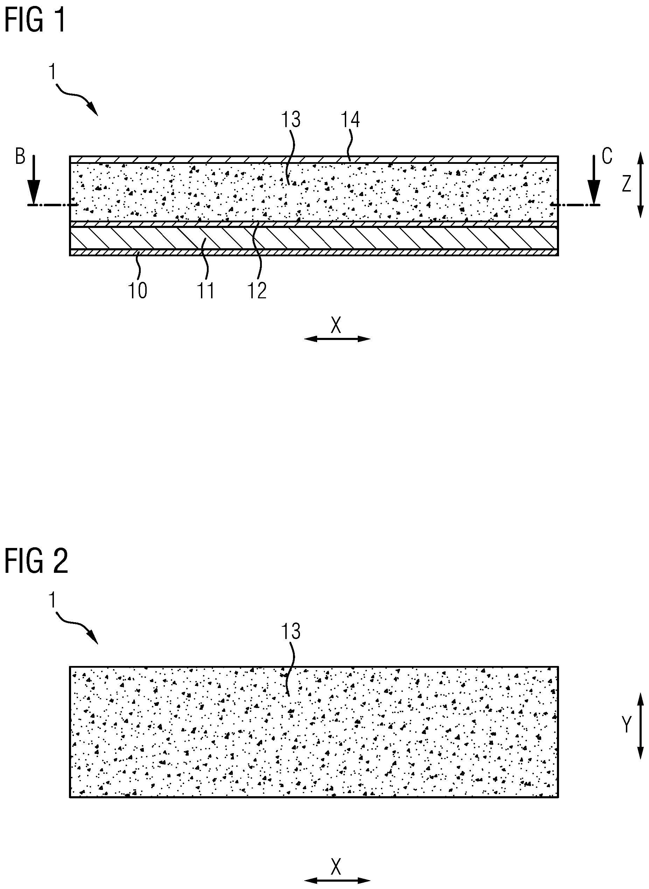

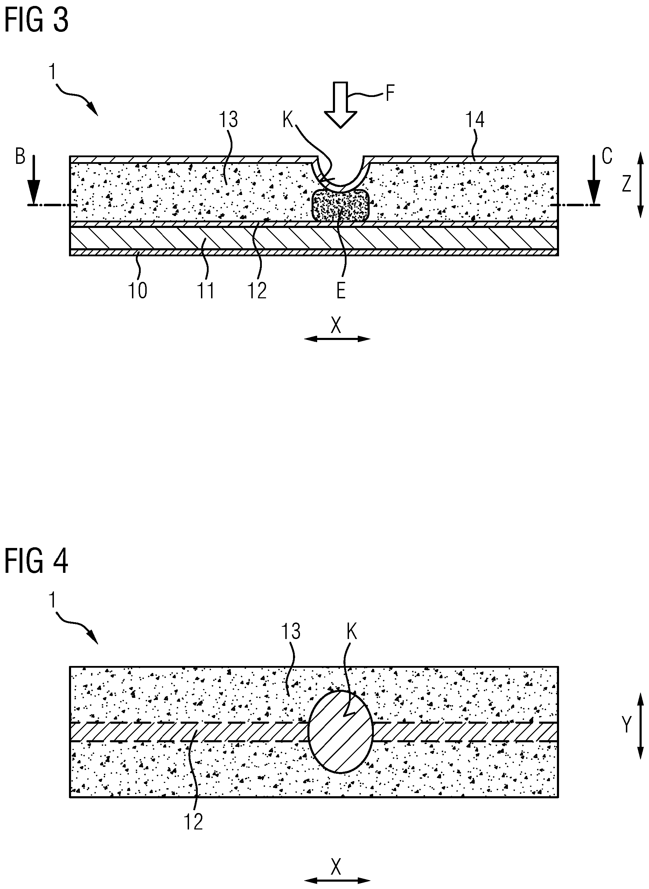

Ein erfindungsgemäßer Drucksensor 1 stellt einen Wellenleiter 1 dar und kann insbesondere als Aufpralldetektor 1 verwendet werden. Die Figur 1 zeigt den erfindungsgemäßen Drucksensor 1 im Längsschnitt ohne Belastung bzw. ohne Krafteinwirkung. Die Figur 2 zeigt einen Horizontalschnitt B-C durch den Drucksensor 1 der Figur 1. Die Figuren 3 und 4 zeigen die Figuren 1 und 2 mit Krafteinwirkung.

Der erfindungsgemäße Drucksensor 1 bzw. Wellenleiter 1 weist eine erste, untere Massefläche 10 auf, welche auf einem Untergrund (nicht dargestellt) angeordnet ist, gegenüber dem ein Druck sensorisch zu erfassen ist. Dem Untergrund in der vertikalen Richtung Z abgewandt schließt sich der ersten, unteren Massefläche 10 ein vergleichsweise dünnes inkompressibles Dielektrikum 11 in Form einer dielektrischen Folie 11 an. An das inkompressible Dielektrikum 11 schließt sich eine Signalfläche 12 an. An die Signalfläche 12 schließt sich ein vergleichsweise dickes kompressibles Dielektrikum 13 an, welches deutlich kompressibler in der vertikalen Richtung Z ausgebildet ist als das inkompressible Dielektrikum 11 in Form der dielektrischen Folie 11. Der Drucksensor 1 bzw. Wellenleiter 1 schließt in der vertikalen Richtung Z nach oben hin mit einer zweiten, oberen Massefläche 14 ab.

Die erste, untere Massefläche 10, die Signalfläche 12 und die zweite, obere untere Massefläche 14 bilden eine unsymmetrische, eingebettete Streifenleitung des Drucksensors 1 bzw. des Wellenleiters 1. Die Signalfläche 12 wird durch die beiden Dielektrika 11, 13 zu der jeweiligen Massefläche 10, 14 elektrisch isoliert. Als kompressibles Dielektrikum kann insbesondere ein flexibles Isolationsmaterial auf der Basis wenigstens einer Kautschukmischung, enthaltend wenigstens einen Silikonkautschuk und Mikrohohlkugeln, verwendet werden, wie es in der DE 10 2017 206 838 A1 beschrieben wird. Die zweite, obere Massefläche 14 ist mit leitfähiger Tinte auf eine flexible Folie gedruckt, um einwirkenden Kräften F nachgeben zu können.

Wirkt nun im Bereich einer Kontaktfläche K eine Kraft F auf den Drucksensor 1 bzw. Wellenleiter 1, so erzeugt die einwirkende Kraft F an dieser Stelle eine Einschnürung E des Wellenleiters 1, indem die einwirkende Kraft F die zweite, obere Massefläche 14 verformt und das darunter befindliche kompressible Dielektrikum 13 komprimiert, siehe Figuren 3 und 4. Die Einschnürung E verändert hierdurch den frequenzabhängige Reflexionsfaktor des Wellenleiters 1.

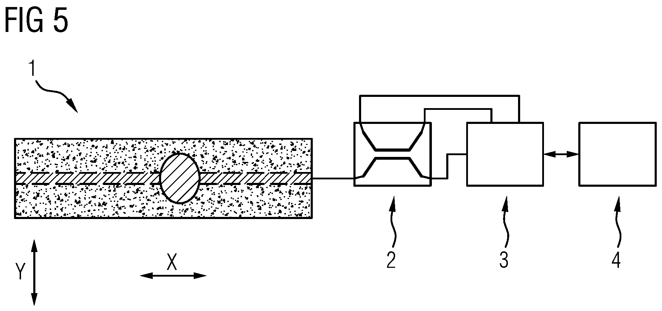

Die Figur 5 zeigt eine erfindungsgemäße Messanordnung in Form eines Drucksensorsystems. Der Wellenleiter 1 stellt eine Hochfrequenz-Übertragungsstrecke dar, deren frequenzabhängiger Reflexionsfaktor sich ändert, wenn der Wellenleiter 1 an einer oder mehreren Stellen durch eine äußere Kraft F belastet wird, wie zuvor anhand der Figuren 1 bis 4 beschrieben.

Für die Messung des frequenzabhängigen Reflexionsfaktors speist eine Mikrowellen-Sende-/Empfangseinheit 2 den Wellenleiter 1 mit einem frequenzvariablen Signal. Mit Hilfe eines Richtkopplers 3 misst der Mikrowellen-Sende-/Empfänger gleichzeitig sowohl die eingespeiste Leistung und als auch den vom Wellenleiter 1 reflektierten Anteil. Die Messdaten gelangen über einen digitalen Datenbus zu einer Auswerteeinheit 4, die hieraus den Reflexionsfaktor als Funktion der Frequenz berechnet und ausgibt.

Vor der initialen Anwendung wird der Wellenleiter 1 kalibriert, indem sein frequenzabhängiger Reflexionsfaktor im unbelasteten Zustand gemessen wird. Diese Daten werden in einem nicht-flüchtigen Speicher der Auswerteeinheit 4 abgelegt und als frequenzabhängigen Bezugswerte für die weiteren Messungen verwendet. Aus den Abweichungen zwischen den aktuellen Messwerten von den Kalibrierdaten lassen sich die Kräfte und die Ortskoordinaten ihrer Angriffspunkte ermitteln, z. B. durch eine inverse Fourier-Transformation oder anhand von gespeicherten Kennfeldern.

Das kompressible Dielektrikum 13 sollte ein möglichst geringes Rückstellverhalten aufweisen, um die Reproduzierbarkeit der Kraftmessung zu erhöhen.

Eine zusätzliche nachgiebige Schicht (nicht dargestellt) auf der zweiten, oberen Massefläche 14 kann Stoßkräfte aufnehmen.

Mit einer nichtleitenden Schicht (nicht dargestellt) unterhalb der ersten, unteren Massefläche 10 lässt sich der Wellenleiter 1 auf metallische Flächen applizieren, ohne das Bezugspotenzial der Elektronik zu beeinflussen.

### Bezugszeichenliste (Teil der Beschreibung)

- B-C: Horizontalschnitt
- E: Einschnürung
- F: Kraft
- K: Kontaktfläche

- X: Längsrichtung; Tiefe
- Y: Querrichtung; Breite
- Z: vertikale Richtung; Höhe
- X, Y: Horizontalen; horizontale Ebene

- 1: Drucksensor; Wellenleiter; Aufpralldetektor
- 10: erste, untere Massefläche
- 11: inkompressibles Dielektrikum; dielektrische Folie
- 12: Signalfläche
- 13: kompressibles Dielektrikum
- 14: zweite, obere Massefläche

- 2: Mikrowellen-Sende-/Empfangseinheit

- 3: Richtkoppler

- 4: Auswerteeinheit

## Patentansprüche

1. Drucksensorsystem umfassend wenigstens einen Drucksensor (1) in Form eines Wellenleiters (1) mit, in dieser Reihenfolge,
einer ersten Massefläche (10),
einem inkompressiblen Dielektrikum (11),
einer Signalfläche (12),
einem kompressiblen Dielektrikum (13) und
einer zweiten Massefläche (14),
wobei der Wellenleiter (1) ausgebildet ist, so dass eine auf den Wellenleiter (1) einwirkende Kraft (F) den frequenzabhängigen Reflektionsfaktor des Wellenleiters (1) verändert und wenigstens eine Steuerungseinheit, welche ausgebildet und eingerichtet ist,
den Wellenleiter (1), vorzugsweise mittels einer Mikrowellen-Sende-/Empfangseinheit (2), mit einem frequenzvariablen Signal anzuregen, den reflektierten Anteil, vorzugsweise mittels eines Richtkopplers (3), zu erfassen,
aus dem ausgesendeten frequenzvariablen Signal und dessen reflektierten Anteil, vorzugsweise mittels einer Auswerteeinheit (4), den Reflektionsfaktor als Funktion der Frequenz zu bestimmen, und
aus der Differenz eines vorbestimmten Reflektionsfaktors und des bestimmten Reflektionsfaktors die einwirkende Kraft (F) zu bestimmen.

2. Drucksensorsystem nach Anspruch 1,
wobei der vorbestimmte Reflektionsfaktor des Wellenleiters (1) im unbelasteten Zustand bestimmt wurde.

3. Drucksensorsystem nach Anspruch 1 oder 2,
wobei die Steuerungseinheit ausgebildet und eingerichtet ist, aus der Differenz des vorbestimmten Reflektionsfaktors und des bestimmten Reflektionsfaktors die einwirkende Kraft (F) mittels einer inversen Fourier-Transformation zu bestimmen.

4. Drucksensorsystem nach Anspruch 1 oder 2,
wobei die Steuerungseinheit ausgebildet und eingerichtet ist, aus der Differenz des vorbestimmten Reflektionsfaktors und des bestimmten Reflektionsfaktors die einwirkende Kraft (F) anhand von gespeicherten Kennfeldern zu bestimmen.

5. Drucksensorsystem nach einem der vorangehenden Ansprüchen,
wobei der Wellenleiter (1) als Mikrostreifenleitung (1) ausgebildet ist.

6. Drucksensorsystem nach einem der vorangehenden Ansprüchen,
wobei der Wellenleiter (1) sich flächig zur einwirkenden Kraft (F) erstreckend ausgebildet ist.

7. Drucksensor (1) in Form eines Wellenleiters (1) zur Verwendung in einem Drucksensorsystem nach einem der Ansprüche 1 bis 6.

8. Steuerungseinheit zur Verwendung in einem Drucksensorsystem nach einem der Ansprüche 1 bis 6.

## Claims

1. Pressure sensor system comprising at least one pressure sensor (1) in the form of a waveguide (1) comprising, in this order,
a first ground plane (10),
an incompressible dielectric (11),
a signal surface (12),
a compressible dielectric (13) and
a second ground plane (14),
wherein the waveguide (1) is designed so that a force (F) acting on the waveguide (1) changes the frequency-dependent reflection factor of the waveguide (1), and at least one control unit which is designed and configured to excite the waveguide (1), preferably by means of a microwave transmitting/receiving unit (2), with a frequency-variable signal to detect the reflected portion, preferably by means of a directional coupler (3),
from the emitted frequency-variable signal and the reflected portion thereof,
preferably by means of an evaluation unit (4), to determine the reflection factor as a function of the frequency, and to determine the acting force (F) from the difference between a predetermined reflection factor and the determined reflection factor.

2. Pressure sensor system according to Claim 1,
wherein the predetermined reflection factor of the waveguide (1) was determined in the unloaded state.

3. Pressure sensor system according to Claim 1 or 2,
wherein the control unit is designed and configured to determine the acting force (F) from the difference between the predetermined reflection factor and the determined reflection factor by means of an inverse Fourier transformation.

4. Pressure sensor system according to Claim 1 or 2,
wherein the control unit is designed and configured to determine the acting force (F) from the difference between the predetermined reflection factor and the determined reflection factor on the basis of stored sets of characteristic curves.

5. Pressure sensor system according to any of the preceding claims, wherein the waveguide (1) is designed as a microstrip line (1).

6. Pressure sensor system according to any of the preceding claims, wherein the waveguide (1) is designed to extend areally with respect to the acting force (F).

7. Pressure sensor (1) in the form of a waveguide (1) for use in a pressure sensor system according to any of Claims 1 to 6.

8. Control unit for use in a pressure sensor system according to any of Claims 1 to 6.

## Revendications

1. Système de capteur de pression comprenant au moins un capteur de pression (1) sous la forme d'un guide d'ondes (1) et comprenant, dans cet ordre,
un premier plan de masse (10),
un diélectrique incompressible (11),
une surface de signalisation (12),
un diélectrique compressible (13) et
un deuxième plan de masse (14),
le guide d'ondes (1) étant configuré de telle sorte qu'une force (F) agissant sur le guide d'ondes (1) modifie le facteur de réflexion dépendant de la fréquence du guide d'ondes (1)
et au moins une unité de commande, laquelle est configurée et conçue pour exciter le guide d'ondes (1), de préférence au moyen d'une unité d'émission/réception de micro-ondes (2), avec un signal à fréquence variable, détecter la partie réfléchie, de préférence au moyen d'un coupleur directionnel (3), à partir du signal à fréquence variable émis et de sa partie réfléchie, de préférence au moyen d'une unité d'évaluation (4), déterminer le facteur de réflexion en fonction de la fréquence, et à partir de la différence entre un facteur de réflexion prédéterminé et le facteur de réflexion déterminé, déterminer la force (F) agissante.

2. Système de capteur de pression selon la revendication 1,
le facteur de réflexion prédéterminé du guide d'ondes (1) ayant été déterminé à l'état non chargé.

3. Système de capteur de pression selon la revendication 1 ou 2,
l'unité de commande étant configurée et conçue pour déterminer la force (F) agissante à partir de la différence entre le facteur de réflexion prédéterminé et le facteur de réflexion déterminé au moyen d'une transformation de Fourier inverse.

4. Système de capteur de pression selon la revendication 1 ou 2,
l'unité de commande étant configurée et conçue pour déterminer la force (F) agissante à partir de la différence entre le facteur de réflexion prédéterminé et le facteur de réflexion déterminé, à l'aide de diagrammes caractéristiques enregistrés.

5. Système de capteur de pression selon l'une des revendications précédentes, le guide d'ondes (1) étant réalisé sous la forme d'une ligne microruban (1).

6. Système de capteur de pression selon l'une des revendications précédentes, le guide d'ondes (1) étant configuré de manière à s'étendre à plat par rapport à la force (F) agissante.

7. Capteur de pression (1) sous forme d'un guide d'ondes (1) destiné à être utilisé dans un système de capteur de pression selon l'une des revendications 1 à 6.

8. Unité de commande destinée à être utilisée dans un système de capteur de pression selon l'une des revendications 1 à 6.
